# EUROPÄISCHE PATENTSCHRIFT

(11) **EP 3 786 374 B1**
(45) Veröffentlichungstag und Bekanntmachung des Hinweises auf die Patenterteilung: **03.08.2022**
(21) Anmeldenummer: 20182813.4
(22) Anmeldetag: 29.06.2020
(51) Int. Cl.: E03C 1/04, F16B 37/08, F16B 31/02, F16B 33/00

(54) **MUTTER ZUR BEFESTIGUNG EINER SANITÄRARMATUR AN EINEM TRÄGER**
NUT FOR FASTENING A SANITARY FITTING TO A SUPPORT
ÉCROU DE FIXATION D'UNE ARMATURE SANITAIRE À UN SUPPORT

(30) Priorität: 30.08.2019 DE 102019006145
(43) Veröffentlichungstag der Anmeldung: 03.03.2021
(73) Patentinhaber: Grohe AG, 58653 Hemer (DE)
(72) Erfinder: MAINKA, David, 58640 Iserlohn (DE); SCHLÜTER, Matthias, 44289 Dortmund (DE); KEITER, Hans Dieter, 58708 Menden (DE); FAUST, Günter, 58730 Fröndenberg (DE)

(56) Entgegenhaltungen:
- WO-A1-2010/123742
- DE-A1-102014 110 638
- US-A1- 2014 124 049

## Beschreibung

Die vorliegende Erfindung betrifft eine Mutter zur Befestigung einer Sanitärarmatur an einem Träger. Sanitärarmaturen dienen der bedarfsgerechten Bereitstellung einer Flüssigkeit an einem Waschbecken, Spülbecken, Badewanne und/oder Dusche.

Zur Befestigung der Sanitärarmaturen weisen die Träger regelmäßig eine Befestigungsöffnung auf, durch die sich die Sanitärarmaturen mit einem Armaturenschaft erstrecken. Der Armaturenschaft kann beispielsweise als Gewindehülse ausgebildet sein. Auf der der Sanitärarmatur gegenüberliegenden Seite des Trägers wird eine Mutter auf den Armaturenschaft geschraubt, die die Sanitärarmatur an dem Träger befestigt. Aufgrund der Länge des Armaturenschafts ist das Festschrauben der Mutter auf den Armaturenschaft mit hohem Aufwand verbunden. Beispielsweise können für das Festschrauben der Mutter deutlich mehr als 20 Umdrehungen erforderlich sein. Aus Kostengründen werden die Muttern zudem regelmäßig aus Kunststoff gefertigt. Hierdurch kann ein Gewinde der Mutter jedoch leicht beschädigt werden, wenn die Mutter mit zu hohem Drehmoment festgeschraubt wird. DE 10 2014 110638 A1, WO 2010/123742 A1 und US 2014/124049 A1 zeigen Muttern zur Befestigung von Sanitärarmaturen welche einige Lösungen im Stand der Technik abbilden.

Aufgabe der Erfindung ist es daher, die mit Bezug auf den Stand der Technik geschilderten Probleme zumindest teilweise zu lösen und insbesondere eine Mutter anzugeben, mit der eine Sanitärarmatur mit geringem Aufwand befestigbar und durch die ein Beschädigen des Gewindes beim Festschrauben verhinderbar ist.

Diese Aufgaben werden gelöst mit einer Mutter gemäß den Merkmalen des unabhängigen Patentanspruchs. Weitere vorteilhafte Ausgestaltungen der Mutter sind in den abhängigen Patentansprüchen angegeben. Es ist darauf hinzuweisen, dass die in den abhängigen Patentansprüchen einzeln aufgeführten Merkmale in beliebiger technologisch sinnvoller Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt eine Mutter zur Befestigung einer Sanitärarmatur an einem Träger bei, die zumindest die folgenden Komponenten aufweist:
- ein Gewindeeinsatz mit einer Mehrzahl von Gewindeflügeln, die beim Aufschieben der Mutter auf ein Gewinde der Sanitärarmatur in einer radialen Richtung nach außen verstellbar sind und eine erste schräge Sperrfläche aufweisen,
- ein Mutterunterteil mit zumindest einer ersten Drehmomentbegrenzungsraste und einer zweiten schrägen Sperrfläche, die beim Festschrauben der Mutter derart mit den ersten schrägen Sperrflächen der Gewindeflügel zusammenwirkt, dass ein Verstellen der Gewindeflügel in der radialen Richtung nach außen verhindert ist, und
- ein Mutteroberteil mit zumindest einer zweiten Drehmomentbegrenzungsraste, die beim Festschrauben der Mutter zur Übertragung eines Drehmoments mit der zumindest einen ersten Drehmomentbegrenzungsraste des Mutterunterteils in Eingriff steht und sich von der zumindest einen ersten Drehmomentbegrenzungsraste des Mutterunterteils löst, wenn das Drehmoment einen Schwellenwert übersteigt.

Die Mutter ist insbesondere nach Art einer Schraubenmutter ausgebildet und/oder um eine Drehachse der Mutter auf ein (Außen-)Gewinde schraubbar. Hierzu weist die Mutter einen Gewindeeinsatz mit einer Mehrzahl von Gewindeflügeln auf, an denen ein (Innen-)Gewinde der Mutter ausgebildet ist. Der Gewindeeinsatz mit den Gewindeflügeln besteht insbesondere zumindest teilweise aus Kunststoff. Die Gewindeflügel sind insbesondere nach Art von Zungen und/oder an dem Gewindeeinsatz biegbar ausgebildet. Dies ermöglicht beim Befestigen der Sanitärarmatur an einem Träger, bei dem es sich beispielsweise um eine (Arbeit-)Platte handeln kann, das Aufschieben der Mutter beispielsweise auf einen als eine Gewindehülse ausgebildeten Armaturenschafft der Sanitärarmatur. Die Gewindeflügel werden beim Aufschieben auf den Armaturenschaft durch das Außengewinde des Armaturenschafts in einer radialen Richtung, d. h. orthogonal zu der Drehachse der Mutter, nach außen gebogen bzw. verstellt. Somit muss die Mutter nicht über die gesamte Länge des Armaturenschafts geschraubt werden. Bei Erreichen eines Anschlags bzw. einer Unterseite des Trägers schnappen bzw. verstellen sich die Gewindeflügel in der radialen Richtung automatisch wieder nach innen, sodass das Gewinde der Gewindeflügel in das Außengewinde des Armaturenschafts eingreift. Die Mutter kann dann mit wenigen Umdrehungen, beispielsweise mit weniger als fünf Umdrehungen, festgeschraubt werden. Das Festschrauben kann von Hand und/oder mit einem Schraubenschlüssel erfolgen. Die Gewindeflügel weisen jeweils eine erste schräge Sperrfläche auf. Im Bereich der ersten schrägen Sperrflächen kann sich beispielsweise ein Durchmesser des Gewindeeinsatzes in einer Längsrichtung, d. h. insbesondere parallel zu der Drehachse der Mutter, vergrößern.

Die Mutter umfasst zudem ein Mutterunterteil mit zumindest einer zweiten schrägen Sperrfläche. Das Mutteroberteil kann ebenfalls zumindest teilweise aus Kunststoff bestehen und/oder rohrförmig bzw. ringförmig ausgebildet sein. Die zweite schräge Sperrfläche kann insbesondere parallel zu den ersten schrägen Sperrflächen der Gewindeflügel verlaufen. Die zweite schräge Sperrfläche des Mutterunterteils wirkt beim Festschrauben der Mutter derart mit den ersten schrägen Sperrflächen der Gewindeflügel zusammen, dass ein Verstellen der Gewindeflügel in der radialen Richtung nach außen verhindert ist. Insbesondere kontaktiert die zweite schräge Sperrfläche des Mutterunterteils beim Festschrauben der Mutter die ersten schrägen Sperrflächen der Gewindeflügel, sodass ein Biegen bzw. Verstellen der Gewindeflügel in der radialen Richtung nach außen blockiert ist. Hierdurch kann sich das an den Gewindeflügeln ausgebildete Gewinde der Mutter beim Festschrauben der Mutter nicht von dem Außengewinde des Armaturenschafts der Sanitärarmatur lösen. Weiterhin ist an dem Mutterunterteil zumindest eine Drehmomentbegrenzungsraste ausgebildet.

Die Mutter umfasst zudem ein Mutteroberteil mit zumindest einer zweiten Drehmomentbegrenzungsraste. Das Mutteroberteil kann ebenfalls zumindest teilweise aus Kunststoff bestehen und/oder rohrförmig bzw. ringförmig ausgebildet sein. Die zumindest eine zweite Drehmomentbegrenzungsraste steht beim Festschrauben der Mutter mit der zumindest einen ersten Drehmomentbegrenzungsraste des Mutterunterteils in Eingriff, sodass ein Drehmoment zum Festschrauben der Mutter von dem Mutteroberteil auf das Mutterunterteil übertragbar ist. Die erste Drehmomentbegrenzungsraste und/oder die zweite Drehmomentbegrenzungsraste können eine zumindest teilweise keil- oder dreieckförmige Querschnittsfläche aufweisen. Weiterhin sind die erste Drehmomentbegrenzungsraste und/oder die zweite Drehmomentbegrenzungsraste derart ausgebildet, dass sie sich voneinander lösen, wenn das Drehmoment beim Festschrauben der Mutter einen Schwellenwert übersteigt. Der Schwellenwert kann beispielsweise 15 Nm (Newtonmeter) bis 20 Nm betragen. Bei Überschreiten des Schwellenwerts können die zumindest eine erste Drehmomentbegrenzungsraste und/oder die zumindest eine zweite Drehmomentbegrenzungsraste (automatisch) in der radialen Richtung beispielsweise verstellt oder gebogen werden, bis dass diese nicht mehr miteinander in Eingriff stehen und somit überrasten. Hierdurch wird einerseits gewährleistet, dass die Mutter mit einem ausreichenden Drehmoment zur Befestigung der Sanitärarmatur angezogen werden kann, andererseits das Gewinde der Mutter und/oder der Schaft der Sanitärarmatur jedoch durch ein zu hohes Drehmoment nicht beschädigt wird.

Der Gewindeeinsatz kann beim Aufschieben der Mutter auf das Gewinde in dem Mutterunterteil in einer Längsrichtung verstellbar sein, sodass die zweite schräge Sperrfläche des Mutterunterteils die ersten schrägen Sperrflächen der Gewindeflügel des Gewindeeinsatzes freigibt. Dies kann insbesondere bedeuten, dass der Gewindeeinsatz beim Aufschieben der Mutter auf das Gewinde in dem Mutterunterteil derart in der Längsrichtung verschoben wird, dass die zweite schräge Sperrfläche des Mutterunterteils nicht in Kontakt mit den ersten schrägen Sperrflächen der Gewindeflügel steht. Hierdurch sind die Gewindeflügel in der radialen Richtung nach außen verstellbar bzw. biegbar.

Das Mutterunterteil kann eine Mehrzahl von Mitnehmerrippen aufweisen, die beim Festschrauben der Mutter das Drehmoment auf den Gewindeeinsatz übertragen. Die Mitnehmerrippen sind insbesondere an einer Innenfläche des Mutterunterteils ausgebildet und erstrecken sich in der Längsrichtung und/oder in der radialen Richtung nach innen. Weiterhin können die Mitnehmerrippen insbesondere in Zwischenräume der Gewindeflügel eingreifen. Durch die Mitnehmerrippen sind der Gewindeeinsatz und das Mutterunterteil (abgesehen von einem gegebenenfalls vorhandenen Spiel) insbesondere verdrehfest miteinander verbunden.

Die zumindest eine erste Drehmomentbegrenzungsraste kann an den Mitnehmerrippen ausgebildet sein.

Die zumindest eine erste Drehmomentbegrenzungsraste kann an einer Innenfläche des Mutterunterteils angeordnet sein.

Die zumindest eine erste Drehmomentbegrenzungsraste kann eine erste schräge Fläche aufweisen. Die erste schräge Fläche kann insbesondere derart verlaufen, dass sie in einer Umfangsrichtung der Mutter ansteigt.

Die zumindest eine erste Drehmomentbegrenzungsraste kann eine erste Kontaktfläche aufweisen, die beim Losschrauben der Mutter mit einer zweiten Kontaktfläche der zumindest einen zweiten Drehmomentbegrenzungsraste in Eingriff steht, sodass zwischen dem Mutteroberteil und dem Mutterunterteil ein Drehmoment übertragbar ist, das den Schwellenwert übersteigt. Hierzu können die erste Kontaktfläche und/oder die zweite Kontaktfläche insbesondere derart ausgebildet sein, dass diese (im Wesentlichen) orthogonal zu der Umfangsrichtung der Mutter verlaufen. Hierdurch wird verhindert, dass die zumindest eine erste Drehmomentbegrenzungsraste und/oder die zumindest eine zweite Drehmomentbegrenzungsraste bei Drehmomenten oberhalb des Schwellenwerts in der radialen Richtung verstellt werden und so nicht mehr miteinander in Eingriff stehen würden.

Das Mutteroberteil kann einen Befestigungskragen aufweisen, über den das Mutterunterteil an dem Mutteroberteil befestigt ist. Der Befestigungskragen ist insbesondere an einem längsseitigen Ende des Mutteroberteils ausgebildet.

Die zumindest eine zweite Drehmomentbegrenzungsraste kann innerhalb des Mutteroberteils an einem Konturbereich ausgebildet sein und sich von dem Konturbereich in der radialen Richtung nach außen erstrecken. Der Konturbereich kann (im Wesentlichen) zumindest teilweise parallel zu dem Befestigungskragen ausgebildet sein.

Die zumindest eine zweite Drehmomentbegrenzungsraste kann eine zweite schräge Fläche aufweisen. Die zweite schräge Fläche der zumindest einen zweiten Drehmomentbegrenzungsraste kann beim Festschrauben der Mutter insbesondere die erste schräge Fläche der zumindest einen ersten Drehmomentbegrenzungsraste kontaktieren.

Die Erfindung sowie das technische Umfeld werden nachfolgend anhand der Figuren näher erläutert. Es ist darauf hinzuweisen, dass die Figuren eine besonders bevorzugte Ausführungsvariante der Erfindung zeigen, diese jedoch nicht darauf beschränkt ist. Dabei sind gleiche Bauteile in den Figuren mit denselben Bezugszeichen versehen. Es zeigen beispielhaft und schematisch:
- Fig. 1:: eine mit einer Mutter an einem Träger befestigte Sanitärarmatur in einer perspektivischen Teildarstellung;
- Fig. 2:: die Mutter in einem Längsschnitt;
- Fig. 3:: die Mutter in einem perspektivischen Längsschnitt;
- Fig. 4:: ein Gewindeeinsatz der Mutter in einer perspektivischen Darstellung;
- Fig. 5:: ein Mutterunterteil der Mutter in einer perspektivischen Darstellung;
- Fig. 6:: ein Mutteroberteil der Mutter in einer perspektivischen Darstellung;
- Fig. 7:: das Mutteroberteil mit dem Mutterunterteil in einem perspektivischen Querschnitt; und
- Fig. 8:: eine Detailansicht des Mutteroberteils mit dem Mutterunterteil im Querschnitt.

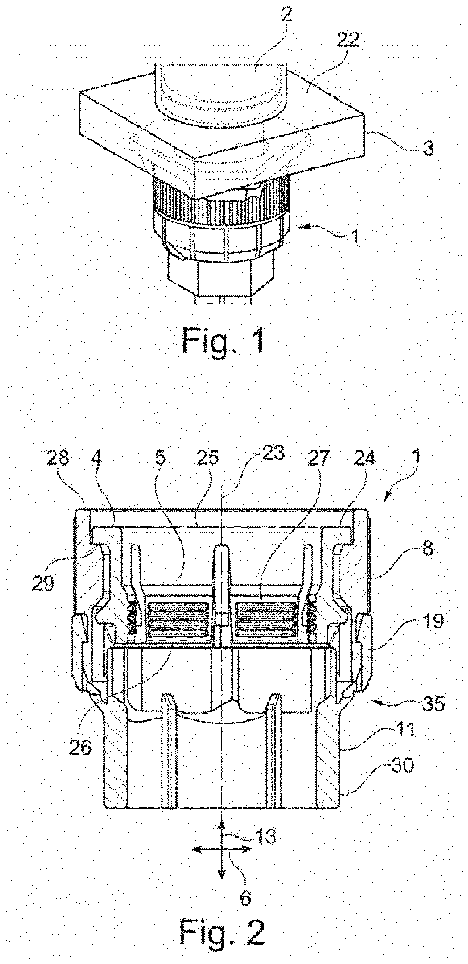

Die Fig. 1 zeigt eine teilweise sichtbare Sanitärarmatur 2, die mit einer Mutter 1 an einem Träger 3 befestigt ist. Bei dem Träger 3 handelt es sich hier um eine Arbeitsplatte, beispielsweise in einer Küche. Die Sanitärarmatur 2 erstreckt sich von einer Oberseite 22 des Trägers 3 mit einem hier nicht gezeigten Armaturenschaft durch den Träger 3. Der Armaturenschaft weist ein Außengewinde auf, auf das die Mutter 1 geschraubt ist, bis dass die Sanitärarmatur 2 an dem Träger 3 befestigt ist.

Die Fig. 2 zeigt die Mutter 1 in einem Längsschnitt. Die Mutter 1 ist zum Festschrauben um eine Drehachse 23 drehbar und umfasst ein Mutteroberteil 11, ein Mutterunterteil 8 und einen Gewindeeinsatz 4, die jeweils (im Wesentlichen) ringförmig oder rohrförmig ausgebildet sind. Der Gewindeeinsatz 4 weist eine Mehrzahl von Gewindeflügeln 5 auf, die sich von einem Gewindeeinsatzkragen 24 an einem ersten längsseitigen Ende 25 des Gewindeeinsatzes 4 in einer parallel zu der Drehachse 23 verlaufenden Längsrichtung 13 zu einem zweiten längsseitigen Ende 26 des Gewindeeinsatzes 4 erstrecken. Die Gewindeflügel 5 weisen auf ihrer Innenseite ein Gewinde 27 auf, mit dem die Mutter 1 auf das Außengewinde des (hier nicht gezeigten) Armaturenschafts der Sanitärarmatur 2 schraubbar ist. Zur Befestigung der Sanitärarmatur 2 wird die Mutter 1 zunächst bis zu einem oberen Anschlag bzw. einer Unterseite des in der Fig. 1 gezeigten Trägers 3 geschoben, wodurch ein drittes längsseitiges Ende 28 des Mutterunterteils 8 mit dem Anschlag bzw. der Unterseite des Trägers 3 zur Anlage kommt. Die Gewindeflügel 5 werden dabei durch das Außengewinde des Armaturenschaffts in einer radialen Richtung 6, d. h. senkrecht zu der Längsrichtung 13 bzw. der Drehachse 23, nach außen gebogen. Beim Schieben der Mutter 1 auf den Armaturenschaft muss die Mutter 1 somit nicht geschraubt werden, sodass die Sanitärarmatur 2 in kürzerer Zeit an dem Träger 3 befestigbar ist. Beim Aufschieben der Mutter 1 auf den Armaturenschaft kommt der Gewindeeinsatzkragen 24 des Gewindeeinsatzes 4 mit einem inneren Absatz 29 des Mutterunterteils 8 zur Anlage, der ein weiteres Verstellen des Gewindeeinsatzes 4 in der Längsrichtung 23 im Mutterunterteil 8 verhindert. Nach Erreichen des Anschlags bzw. der Unterseite des Trägers 3 schnappen die Gewindeflügel 5 in der radialen Richtung 6 zurück nach innen, sodass das Gewinde 27 der Gewindeflügel 5 mit dem Außengewinde des Armaturenschafts in Eingriff steht. Zur abschließenden Befestigung der Sanitärarmatur 2 an dem Träger 3 ist die Mutter 1 anschließend über das Mutteroberteil 11 an dem Armaturenschaft der Sanitärarmatur 2 festschraubbar. Hierzu weist das Mutteroberteil 11 eine Ansatzfläche 30 für einen Schraubenschlüssel auf, über die die Mutter 1 um die Drehachse 23 drehbar ist. Ein viertes längsseitiges Ende 35 des Mutterunterteils 8 ist nach Art eines Schnapphakens ausgebildet, über den das Mutterunterteil 8 an einem Befestigungskragen 19 des Mutteroberteils 11 in Form einer Schnappverbindung befestigt ist.

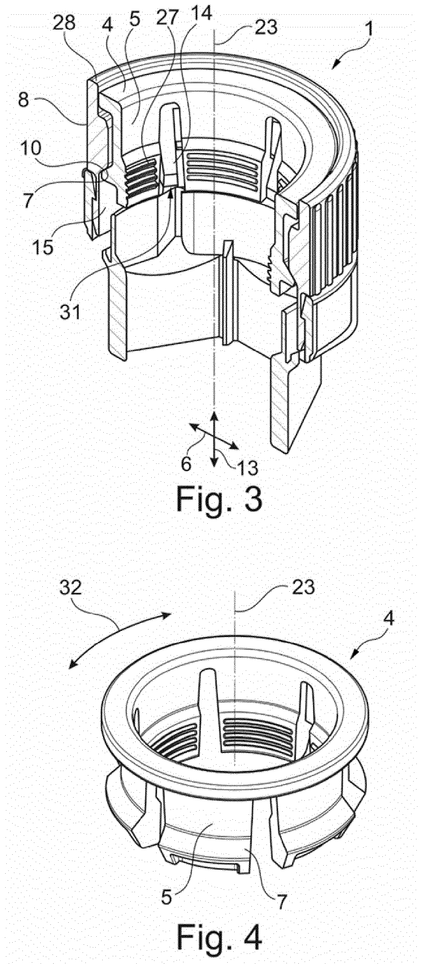

Die Fig. 3 zeigt die Mutter 1 in einer perspektivischen Schnittdarstellung, nach dem die Mutter 1 durch Drehen um die Drehachse 23 an dem hier nicht gezeigten Armaturenschaft der Sanitärarmatur 2 festgeschraubt wurde. Das Mutterunterteil 8 weist an einer Innenfläche 15 eine Mehrzahl von Mitnehmerrippen 14 auf, die sich in die Längsrichtung 13 und in der radialen Richtung 6 nach innen in Zwischenräume 31 zwischen den Gewindeflügeln 5 erstrecken. Hierdurch wird beim Festschrauben der Mutter 1 das Drehmoment von dem Mutterunterteil 8 auf den Gewindeeinsatz 4 übertragen. Durch das Festschrauben der Mutter 1 wurde der Gewindeeinsatz 4 in dem Mutterunterteil 8 in der Längsrichtung 13 in Richtung des dritten längsseitigen Endes 28 des Mutterunterteils 8 bewegt, bis dass eine erste schräge Sperrfläche 7 der Gewindeflügel 5 mit einer an der Innenfläche 15 des Mutterunterteils 8 ausgebildeten zweiten schrägen Sperrfläche 10 zur Anlage kommt. Die zweite schräge Sperrfläche 10 verhindert dadurch, dass die Gewindeflügel 5 beim Festschrauben der Mutter 1 in der radialen Richtung 6 nach außen verstellt werden und somit das Gewinde 27 nicht mehr im Eingriff mit dem Außengewinde des Armaturenschafts stehen würde.

Die Fig. 4 zeigt den Gewindeeinsatz 4 mit den an den einzelnen Gewindeflügeln 5 ausgebildeten ersten schrägen Sperrflächen 7 in einer perspektivischen Darstellung. Der Gewindeeinsatz 4 weist bei der hier gezeigten Ausführungsvariante 6 Gewindeflügel 5 auf, die in einer Umfangsrichtung 32 um die Drehachse 23 gleichmäßig verteilt sind.

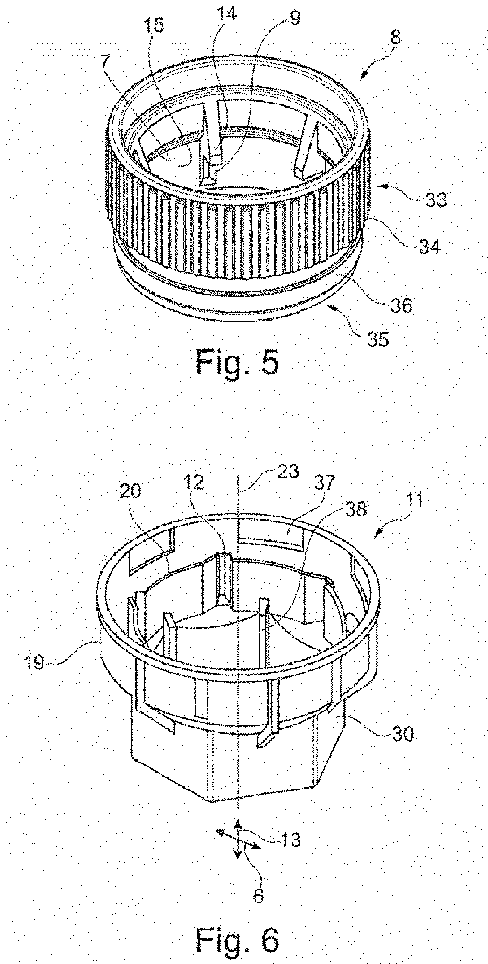

Die Fig. 5 zeigt das Mutterunterteil 8 in einer perspektivischen Darstellung. Zu erkennen sind hier die Mitnehmerrippen 14 sowie die erste schräge Sperrfläche 7 an der Innenfläche 15 des Mutterunterteils 8. An den Mitnehmerrippen 14 sind jeweils eine Drehmomentbegrenzungsraste 9 ausgebildet. An einer Außenfläche 33 des Mutterunterteils 8 ist eine Griffkontur 34 ausgebildet über die die Mutter 1 von Hand drehbar ist. Weiterhin ist an der Außenfläche 33 am vierten längsseitigen Ende 35 des Mutterunterteils 8 ein Schnappwulst 36 zur Befestigung des Mutterunterteils 8 an dem Mutteroberteil 11 ausgebildet.

Die Fig. 6 zeigt das Mutteroberteil 11 in einer perspektivischen Darstellung. Zu erkennen ist hier der Befestigungskragen 19, auf dessen Innenseite Schnappkonturen 37 zum Verrasten mit dem in der Fig. 5 gezeigten Schnappwulst 36 des Mutterunterteils 8 ausgebildet sind. Die Ansatzfläche 30 kann beispielsweise für einen Schraubenschlüssel mit einer Schlüsselweite von 36 mm vorgesehen sein. Weiterhin weist das Mutteroberteil 11 einen Konturbereich 20 auf, der in der Längsrichtung 13 teilweise parallel zu dem Befestigungskragen 19 verläuft. An dem Konturbereich 20 sind zweite Drehmomentbegrenzungsrasten 12 ausgebildet, die sich von dem Konturbereich 20 in der radialen Richtung 6 nach außen erstrecken. Zudem weist das Mutteroberteil 11 in die Längsrichtung 13 verlaufende Zentrierrippen 38 auf, durch die das Mutterunterteil 8 auf den Armaturenschaft zentrierbar ist.

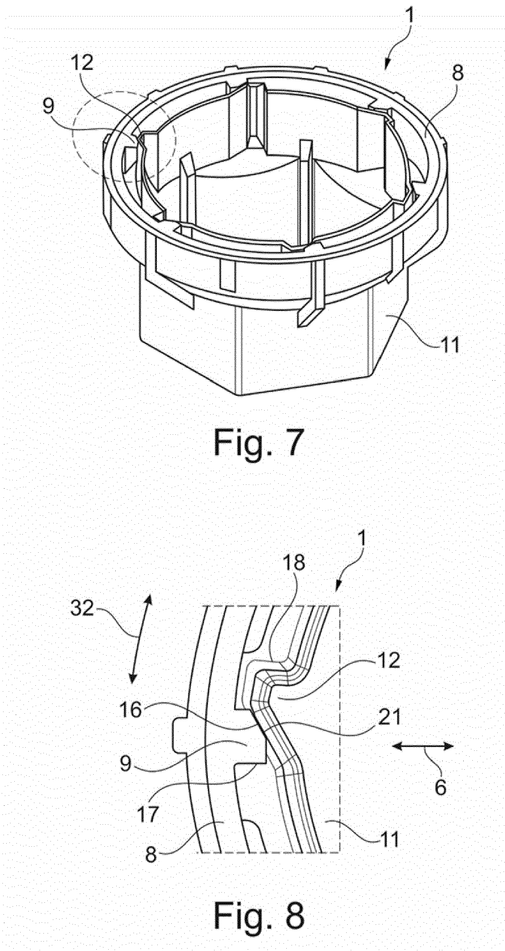

Die Fig. 7 zeigt das Mutteroberteil 11 mit dem Mutterunterteil 8 in einem perspektivischen Querschnitt. Die ersten Drehmomentbegrenzungsrasten 9 des Mutterunterteils 8 stehen beim Festschrauben der Mutter 1 mit den zweiten Drehmomentbegrenzungsrasten 12 des Mutteroberteils 11 in Eingriff, sodass ein Drehmoment von dem Mutteroberteil 11 auf das Mutterunterteil 8 übertragbar ist.

Die Fig. 8 zeigt eine Detailansicht des in der Fig. 7 mit einem Kreis gekennzeichneten Bereichs der Mutter 1 im Querschnitt. Zu erkennen ist hier eine der ersten Drehmomentbegrenzungsrasten 9 des Mutterunterteils 8 und eine der zweiten Drehmomentbegrenzungsrasten 12 des Mutteroberteils 11, wie diese beim Festschrauben der Mutter 1 miteinander in Eingriff stehen. Hierbei liegt eine erste schräge Fläche 16 der ersten Drehmomentbegrenzungsrasten 9 an einer zweiten schrägen Fläche 21 der zweiten Drehmomentbegrenzungsraste 12 an. Übersteigt das Drehmoment beim Festschrauben der Mutter 1 einen Schwellenwert, werden die ersten Drehmomentbegrenzungsrasten 9 in der radialen Richtung 6 nach außen und/oder die zweiten Drehmomentbegrenzungsrasten 12 in der radialen Richtung 6 nach innen gedrückt, sodass sich die ersten Drehmomentbegrenzungsrasten 9 und die zweiten Drehmomentbegrenzungsrasten 12 voneinander lösen. Hierdurch wird verhindert, dass das in den Fig. 2 und 3 gezeigte Gewinde 27 und/oder der Schaft der Sanitärarmatur durch ein zu hohes Drehmoment beim Festschrauben der Mutter 1 beschädigt wird. Weiterhin weisen die ersten Drehmomentbegrenzungsrasten 9 jeweils eine erste Kontaktfläche 17 und die zweiten Drehmomentbegrenzungsrasten 12 jeweils eine zweite Kontaktfläche 18 auf. Die ersten Kontaktflächen 17 und zweiten Kontaktflächen 18 verlaufen nicht schräg, sondern (im Wesentlichen) orthogonal zur Umfangsrichtung 32 der Mutter 1. Hierdurch sind beim Lösen der Mutter 1 auch Drehmomente oberhalb des Schwellenwerts übertragbar, sodass die Mutter 1 stets von dem Armaturenschafft der Sanitärarmatur 2 lösbar ist.

Durch die vorliegende Erfindung sind Sanitärarmaturen mit geringem Aufwand befestigbar und ein Beschädigen des Gewindes der Mutter und/oder der Schaft der Sanitärarmatur beim Festschrauben verhinderbar.

### Bezugszeichenliste

- 1: Mutter
- 2: Sanitärarmatur
- 3: Träger
- 4: Gewindeeinsatz
- 5: Gewindeflügel
- 6: radiale Richtung
- 7: erste schräge Sperrfläche
- 8: Mutterunterteil
- 9: erste Drehmomentbegrenzungsraste
- 10: zweite schräge Sperrfläche
- 11: Mutteroberteil
- 12: zweite Drehmomentbegrenzungsraste
- 13: Längsrichtung
- 14: Mitnehmerrippe
- 15: Innenfläche
- 16: erste schräge Fläche
- 17: erste Kontaktfläche
- 18: zweite Kontaktfläche
- 19: Befestigungskragen
- 20: Konturbereich
- 21: zweite schräge Fläche
- 22: Oberseite
- 23: Drehachse
- 24: Gewindeeinsatzkragen
- 25: erstes längsseitiges Ende
- 26: zweites längsseitiges Ende
- 27: Gewinde
- 28: drittes längsseitiges Ende
- 29: innerer Absatz
- 30: Ansatzfläche
- 31: Zwischenräume
- 32: Umfangsrichtung
- 33: Außenfläche
- 34: Griffkontur
- 35: viertes längsseitiges Ende
- 36: Schnappwulst
- 37: Schnappkontur
- 38: Zentrierrippe

## Patentansprüche

1. Mutter (1) zur Befestigung einer Sanitärarmatur (2) an einem Träger (3), zumindest aufweisend:
- ein Gewindeeinsatz (4) mit einer Mehrzahl von Gewindeflügeln (5), die beim Aufschieben der Mutter (1) auf ein Gewinde der Sanitärarmatur (2) in einer radialen Richtung (6) nach außen verstellbar sind und eine erste schräge Sperrfläche (7) aufweisen,
- ein Mutterunterteil (8) mit zumindest einer ersten Drehmomentbegrenzungsraste (9) und einer zweiten schrägen Sperrfläche (10), die beim Festschrauben der Mutter (1) derart mit den ersten schrägen Sperrflächen (7) der Gewindeflügel (5) zusammenwirkt, dass ein Verstellen der Gewindeflügel (5) in der radialen Richtung (6) nach außen verhindert ist **dadurch gekennzeichnet, dass** die Mutter weiter aufweist:
- ein Mutteroberteil (11) mit zumindest einer zweiten Drehmomentbegrenzungsraste (12), die beim Festschrauben der Mutter (1) zur Übertragung eines Drehmoments mit der zumindest einen ersten Drehmomentbegrenzungsraste (9) des Mutterunterteils (8) in Eingriff steht und sich von der zumindest einen ersten Drehmomentbegrenzungsraste (9) des Mutterunterteils (8) löst, wenn das Drehmoment einen Schwellenwert übersteigt.

2. Mutter (1) nach Patentanspruch 1, wobei der Gewindeeinsatz (4) beim Aufschieben der Mutter (1) auf das Gewinde in dem Mutterunterteil (8) in einer Längsrichtung (13) verstellbar ist, sodass die zweite schräge Sperrfläche (10) des Mutterunterteils (8) die ersten schrägen Sperrflächen (7) der Gewindeflügel (5) des Gewindeeinsatzes (4) freigibt.

3. Mutter (1) nach einem der vorhergehenden Patentansprüche, wobei das Mutterunterteil (8) eine Mehrzahl von Mitnehmerrippen (14) aufweist, die beim Festschrauben der Mutter (1) das Drehmoment auf den Gewindeeinsatz (4) übertragen.

4. Mutter (1) nach Patentanspruch 3, wobei die zumindest eine erste Drehmomentbegrenzungsraste (9) an den Mitnehmerrippen (14) ausgebildet ist.

5. Mutter (1) nach einem der vorhergehenden Patentansprüche, wobei die zumindest eine erste Drehmomentbegrenzungsraste (9) an einer Innenfläche (15) des Mutterunterteils (8) angeordnet ist.

6. Mutter (1) nach einem der vorhergehenden Patentansprüche, wobei die zumindest eine erste Drehmomentbegrenzungsraste (9) eine erste schräge Fläche (16) aufweist.

7. Mutter (1) nach einem der vorhergehenden Patentansprüche, wobei die zumindest eine erste Drehmomentbegrenzungsraste (9) eine erste Kontaktfläche (17) aufweist, die beim Losschrauben der Mutter (1) mit einer zweiten Kontaktfläche (18) der zumindest einen zweiten Drehmomentbegrenzungsraste (12) in Eingriff steht, sodass zwischen dem Mutteroberteil (11) und dem Mutterunterteil (8) ein Drehmoment übertragbar ist, das den Schwellenwert übersteigt.

8. Mutter (1) nach einem der vorhergehenden Patentansprüche, wobei das Mutteroberteil (11) einen Befestigungskragen (19) aufweist, über den das Mutterunterteil (8) an dem Mutteroberteil (11) befestigt ist.

9. Mutter (1) nach einem der vorhergehenden Patentansprüche, wobei die zumindest eine zweite Drehmomentbegrenzungsraste (12) innerhalb des Mutteroberteils (11) an einem Konturbereich (20) ausgebildet ist und sich von dem Konturbereich (20) in der radialen Richtung (6) nach außen erstreckt.

10. Mutter (1) nach einem der vorhergehenden Patentansprüche, wobei die zumindest eine zweite Drehmomentbegrenzungsraste (12) eine zweite schräge Fläche (21) aufweist.

## Claims

1. A nut (1) for fastening a sanitary fitting (2) to a support (3), comprising at least:
- one threaded insert (4) with a plurality of threaded wings (5) which, when sliding the nut (1) onto a thread of the sanitary fitting (2), can be moved outwardly in a radial direction (6) and have a first inclined locking surface (7),
- one nut lower part (8) with at least one first torque-limiting detent (9) and a second inclined locking surface (10) which, when tightening the nut (1), interacts with the first inclined locking surfaces (7) of the threaded wings (5) in such a manner that the threaded wings (5) are prevented from moving outwards in the radial direction (6), **characterized in that** the nut further comprises:
- a nut upper part (11) with at least one second torque-limiting detent (12) which, when tightening the nut (1) for transmitting a torque, engages with the at least one first torque-limiting detent (9) of the nut lower part (8) and disengages from the at least one first torque-limiting detent (9) of the nut lower part (8) when the torque exceeds a threshold value.

2. The nut (1) according to claim 1, wherein, when sliding the nut (1) onto the thread in the nut lower part (8), the threaded insert (4) can be moved in a longitudinal direction (13) such that the second inclined locking surface (10) of the nut lower part (8) releases the first inclined locking surfaces (7) of the threaded wings (5) of the threaded insert (4).

3. The nut (1) according to any one of the preceding claims, wherein the nut lower part (8) has a plurality of driving ribs (14) which transmit the torque to the threaded insert (4) when tightening the nut (1).

4. The nut (1) according to claim 3, wherein the at least one first torque-limiting detent (9) is formed on the driving ribs (14).

5. The nut (1) according to any one of the preceding claims, wherein the at least one first torque-limiting detent (9) is arranged on an inner surface (15) of the nut lower part (8).

6. The nut (1) according to one of the preceding claims, wherein the at least one first torque-limiting detent (9) has a first inclined surface (16).

7. The nut (1) according to any one of the preceding claims, wherein the at least one first torque-limiting detent (9) has a first contact surface (17) which, when unscrewing the nut (1), engages with a second contact surface (18) of the at least one second torque-limiting detent (12) such that a torque which exceeds the threshold value can be transmitted between the nut upper part (11) and the nut lower part (8).

8. The nut (1) according to any one of the preceding claims, wherein the nut upper part (11) has a fastening collar (19) via which the nut lower part (8) is fastened to the nut upper part (11).

9. The nut (1) according to any one of the preceding claims, wherein the at least one second torque-limiting detent (12) is formed within the nut upper part (11) at a contour region (20) and extends outwardly from the contour region (20) in the radial direction (6).

10. The nut (1) according to any one of the preceding claims, wherein the at least one second torque-limiting detent (12) has a second inclined surface (21).

## Revendications

1. Écrou (1), destiné à fixer une robinetterie sanitaire (2) sur un support (3), comportant au moins :
- un insert fileté (4) doté d'une pluralité d'ailettes (5), qui lorsque l'on emboîte l'écrou (1) sur un filetage de la robinetterie sanitaire (2) sont ajustables dans une direction radiale (6) vers l'extérieur et qui comportent une première surface d'arrêt (7) oblique,
- une partie inférieure (8) d'écrou, dotée d'au moins un premier cran de limitation (9) du couple de serrage et d'une deuxième surface d'arrêt (10) oblique, qui lors du vissage de l'écrou (1) coopère avec la première surface d'arrêt (7) oblique des ailettes (5), de sorte à empêcher un ajustage des ailettes (5) dans la direction radiale (6) vers l'extérieur, **caractérisé en ce que** l'écrou comporte par ailleurs :
- une partie supérieure (11) d'écrou dotée d'au moins un deuxième cran de limitation (12) du couple de serrage, qui lors du vissage de l'écrou (1), pour transmettre un premier couple de serrage, est en engagement avec l'au moins un premier cran de limitation (9) du couple de serrage de la partie inférieure (8) d'écrou et se dégage de l'au moins un premier cran de limitation (9) du couple de serrage de la partie inférieure (8) d'écrou, lorsque le couple de serrage dépasse une valeur seuil.

2. Écrou (1) selon la revendication 1, lorsque l'on emboîte l'écrou (1) sur le filetage, l'insert fileté (4) étant ajustable dans une direction longitudinale (13) dans la partie inférieure (8) d'écrou, de sorte que la deuxième surface d'arrêt (10) oblique de la partie inférieure (8) d'écrou libère la première surface d'arrêt (7) oblique des ailettes (5) de l'insert fileté (4).

3. Écrou (1) selon l'une quelconque des revendications précédentes, la partie inférieure (8) d'écrou comportant une pluralité de nervures d'entraînement (14), qui lorsque l'on visse l'écrou (1), transmettent le couple de serrage sur l'insert fileté (4).

4. Écrou (1) selon la revendication 3, l'au moins un premier cran de limitation (9) du couple de serrage étant conçu sur les nervures d'entraînement (14).

5. Écrou (1) selon l'une quelconque des revendications précédentes, l'au moins un premier cran de limitation (9) du couple de serrage étant placé sur une surface intérieure (15) de la partie inférieure (8) d'écrou.

6. Écrou (1) selon l'une quelconque des revendications précédentes, l'au moins un premier cran de limitation (9) du couple de serrage comportant une première surface oblique (16).

7. Écrou (1) selon l'une quelconque des revendications précédentes, l'au moins un premier cran de limitation (9) du couple de serrage comportant une première surface de contact (17), qui lors du dévissage de l'écrou (1) est en engagement avec une deuxième surface de contact (18) de l'au moins un deuxième cran de limitation (12) du couple de serrage, de telle sorte qu'entre la partie supérieure (11) d'écrou et la partie inférieure (8) d'écrou soit transmissible un couple de serrage qui excède la valeur seuil.

8. Écrou (1) selon l'une quelconque des revendications précédentes, la partie supérieure (11) d'écrou comportant une collerette de fixation (19), par l'intermédiaire de laquelle la partie inférieure (8) d'écrou est fixée sur la partie supérieure (11) d'écrou.

9. Écrou (1) selon l'une quelconque des revendications précédentes, l'au moins un deuxième cran de limitation (12) du couple de serrage étant conçu sur la partie supérieure (11) d'écrou, sur une zone de contour (20) et s'étendant vers l'extérieur dans la direction radiale (6), à partir de la zone de contour (20).

10. Écrou (1) selon l'une quelconque des revendications précédentes, l'au moins un deuxième cran de limitation (12) du couple de serrage comportant une deuxième surface oblique (21).
